# EUROPEAN PATENT APPLICATION

(11) **EP 3 879 609 A1**
(43) Date of publication of application: **15.09.2021**
(21) Application number: 19911563.5
(22) Date of filing: 24.09.2019
(51) Int. Cl.: H01M 4/525, H01M 4/505, H01M 10/052, H01M 10/0562

(54) **OXIDE-BASED POSITIVE ELECTRODE ACTIVE MATERIAL FOR SOLID-STATE LITHIUM-ION BATTERIES, METHOD FOR PRODUCING PRECURSOR OF OXIDE-BASED POSITIVE ELECTRODE ACTIVE MATERIAL FOR SOLID-STATE LITHIUM-ION BATTERIES, METHOD FOR PRODUCING OXIDE-BASED POSITIVE ELECTRODE ACTIVE MATERIAL FOR SOLID-STATE LITHIUM-ION BATTERIES, AND SOLID-STATE LITHIUM-ION BATTERY**

(30) Priority: 21.01.2019 JP 2019008087
(71) Applicant: JX Nippon Mining & Metals Corporation, Tokyo 105-8417 (JP)
(72) Inventor: KAWAHASHI,Yasuhiro, Kitaibaraki-shi, Ibaraki 319-1535 (JP)
(74) Representative: Yeadon IP Limited
(86) International application number: PCT/JP2019/037402
(87) International publication number: WO 2020/152910

(57) **Abstract**

Provided is an oxide-based positive electrode active material for all-solid-state lithium ion batteries, the oxide-based positive electrode active material having a compositional formula represented by:
LiₐNiₓCo_{y}Mn_{1-X-y}O₂, with 0.98 ≤ a ≤ 1.05; 0.8 ≤ x ≤ 1.0; and 0 ≤ y ≤ 0.20,
wherein the oxide-based positive electrode active material has an average particle diameter D50 of from 1.0 to 5.0 µm, a residual alkali content of from 0.3 to 2.0% by mass, and a sulfate radical content of from 100 to 6000 wtppm.

## Description

### FIELD OF THE INVENTION

The present invention relates to an oxide-based positive electrode active material for all-solid-state lithium ion batteries, a method for producing a precursor of oxide-based positive electrode active material for all-solid-state lithium ion batteries, a method for producing oxide-based positive electrode active material for all-solid-state lithium ion batteries, and an all-solid-state lithium ion battery.

### BACKGROUND OF THE INVENTION

With rapidly spreading of information relational devices and communication devices such as personal computers, video cameras, and mobile phones in recent years, development of batteries used as their power sources has been emphasized. Among the batteries, lithium batteries are attracting attention in terms of high energy density. Further, the high energy density and improvement of battery characteristics are also required for lithium secondary batteries in large-scale applications such as on-board power sources and road leveling.

However, for the lithium ion batteries, most of the electrolytes are organic compounds, and even if a flame-retardant compound is used, any risk of causing a fire could not be completely eliminated. As alternative candidates for such liquid-type lithium ion batteries, all-solid lithium ion batteries having a solid electrolyte have been attracting attention in recent years.

Also, as the positive electrode active material for non-aqueous electrolyte secondary batteries, lithium cobalt composite oxides represented by lithium cobaltate (LiCoO₂) as well as lithium nickel composite oxides represented by lithium nickelate (LiNiO₂), and lithium manganese composite oxides represented by lithium manganate (LiMnO₂) are widely used.

By the way, lithium cobaltate has problems that it is expensive because a reserve of cobalt is less, and it contains cobalt as a main component, which has unstable supply and larger price changes. Therefore, a lithium nickel composite oxide or a lithium manganese composite oxide containing relatively inexpensive nickel or manganese as a main component has attracted attention in terms of cost (Patent Literatures 1 to 3). However, although lithium manganate has better thermal stability than that of lithium cobalt oxide, it has a charge/discharge capacity much lower than that of other materials, and also has a very short charge/discharge cycle characteristics which indicate its life. Therefore, the lithium manganate has many practical problems as a battery. On the other hand, lithium titanate exhibits a larger charge/discharge capacity than that of lithium cobaltate, and is thus expected as a positive electrode active material capable of producing a battery having a higher energy density with lower costs.

### CITATION LIST

### Patent Literatures

[Patent Literature 1] WO 2013/115544 A1
[Patent Literature 2] Japanese Patent Application Publication No. 2011-124086 A
[Patent Literature 3] WO 2015/008582 A1

### SUMMARY OF THE INVENTION

### Technical Problem

As a method for improving the thermal stability of the lithium-nickel composite oxide, a technique for washing fired lithium nickelate with water has been developed. It is said that the washing of the fired lithium nickelate with water can result in a positive electrode active material with higher capacity and with improved thermal stability and storage characteristics in an elevated temperature environment when the lithium nickelate is used in a non-aqueous electrolyte secondary battery. However, when substituting a part of nickel in the lithium nickel composite oxide with another substance, a large amount of elemental substitution (in other words, a state where the nickel ratio is increased) results in an improved thermal stability, but leads to a decrease in a battery capacity.

On the other hand, when a small amount of elemental substitution (in other words, a state where the nickel ratio is increased) is performed in order to prevent a decrease in a battery capacity, the thermal stability is not sufficiently improved. Moreover, the increased nickel ratio also causes a problem that cation mixing tends to occur during firing, leading to difficulty in synthesis. Therefore, although various lithium-nickel composite oxides in which a part of nickel is replaced with other substances have been developed, it cannot be said that they sufficiently fulfill the requirements for higher capacity and higher output in non-aqueous electrolyte secondary batteries.

Therefore, an object of an embodiment according to the present invention is to provide an oxide-based positive electrode active material for all-solid-state lithium ion batteries, which can obtain improved battery characteristics upon use for an all-solid-state lithium ion battery.

### Solution to Problem

In an embodiment, the present invention provides an oxide-based positive electrode active material for all-solid-state lithium ion batteries, the oxide-based positive electrode active material having a compositional formula represented by LiₐNiₓCo_{y}Mn_{1x-y}O₂, with 0.98 ≤ a ≤ 1.05; 0.8 ≤ x ≤ 1.0; and 0 ≤ y ≤ 0.20, wherein the oxide-based positive electrode active material has an average particle diameter D50 of from 1.0 to 5.0 µm, a residual alkali content of from 0.3 to 2.0% by mass, and a sulfate radical content of from 100 to 6000 wtppm.

In another embodiment, the present invention provides a method for producing a precursor of an oxide-based positive electrode active material for all-solid-state lithium ion batteries, the precursor being represented by a compositional formula of a composite hydroxide NiₓCo_{y}Mn_{1-x-y}(OH)₂, with 0.8 ≤ x ≤ 1.0; and 0 ≤ y ≤ 0.20, wherein the method comprises a step of performing a crystallization reaction using an aqueous solution containing basic aqueous solutions of a nickel salt, a cobalt salt, a manganese salt, an aqueous ammonia and an alkali metal as a reaction solution while controlling a pH of the reaction solution to a range of from 10.5 to 11.5, and an ammonium ion concentration to a range of from 5 to 25 g/L and a temperature of the reaction solution to a range of from 40 to 65 °C.

In the method for producing a precursor of an oxide-based positive electrode active material for all-solid-state lithium ion batteries, the precursor has an average particle diameter D50 of from 1.0 to 5.0 µm.

In still another embodiment of the method for producing a precursor of an oxide-based positive electrode active material for all-solid-state lithium ion batteries according to an embodiment of the present invention, the precursor has a sulfate radical content of from 100 to 6000 wtppm.

In yet another embodiment, the present invention provides a method for producing an oxide-based positive electrode active material for all-solid-state lithium ion batteries, the method comprising steps of: mixing the precursor produced by the method for producing the precursor according to an embodiment of the present invention with a lithium compound such that a ratio of an atomic number of lithium to a sum (Me) of atomic numbers of Ni, Co and Mn (Li / Me) is from 0.98 to 1.05, to form a lithium mixture; and firing the lithium mixture in an oxygen atmosphere at a temperature of 450 to 520 °C for 2 to 15 hours, and then further firing it at a temperature of 680 to 850 °C for 2 to 15 hours.

In still another embodiment, the present invention provides an all-solid-state lithium ion battery comprising the oxide-based positive electrode active material for all-solid-state lithium ion batteries according to an embodiment of the present invention.

### Advantageous Effects of Invention

According to the embodiment of the present invention, it is possible to provide an oxide-based positive electrode active material for all-solid-state lithium ion batteries, which can obtain improved battery characteristics upon use for an all-solid-state lithium ion battery.

### DETAILED DESCRIPTION OF THE INVENTION

### (Configuration of Oxide-Based Positive Electrode Active Material for All-Solid-State Lithium Ion Batteries)

An oxide-based positive electrode active material for all-solid-state lithium ion batteries according to an embodiment of the present invention has a compositional formula represented by:

LiₐNiₓCo_{y}Mn_{1-x-y}O₂

in which 0.98 ≤ a ≤ 1.05; 0.8 ≤ x ≤ 1.0; and 0 ≤ y ≤ 0.20.

In the oxide-based positive electrode active material for all-solid-state lithium ion batteries according to an embodiment of the present invention, a composition of Li of less than 0.98 leads to an insufficient amount of lithium and a difficulty to maintain a stable crystal structure. The composition of Li more than 1.05 may decrease a discharge capacity of an all-solid-state lithium ion battery produced using the positive electrode active material.

The oxide-based positive electrode active material for all-solid-state lithium ion batteries according to an embodiment of the present invention has a controlled average particle diameter D50 of from 1.0 to 5.0 µm. Such a configuration can lead to a lager contact area between a solid electrolyte and a positive electrode active material, resulting in good conductivity of Li ions between the positive electrode active material and the solid electrolyte. The average particle diameter D50 may be 1.5 µm or more, or 2.5 µm or more. Further, the average particle diameter D50 may be 3.5 µm or less, or 4.5 µm or less.

The oxide-based positive electrode active material for all-solid-state lithium ion batteries according to an embodiment of the present invention has a content of residual alkali contained therein of from 0.3 to 2.0% by mass. Such a configuration can lead to improved conductivity of Li ions between a positive electrode active material and a solid electrolyte via a buffer layer with lithium niobate or the like when used in an all-solid-state lithium ion battery, resulting in an improved battery capacity and battery capacity retention rate. The residual alkali content is more preferably 1.5% by mass or less, and more preferably 0.7% by mass or less.

In the oxide-based positive electrode active material for all-solid-state lithium ion batteries according to the embodiment of the present invention, a sulfate radical content is controlled to 100 to 6000 wtppm. Such a configuration can lead to improved conductivity of Li ions between a positive electrode active material and a solid electrolyte via a buffer layer with lithium niobate or the like when used in an all-solid-state lithium ion battery, resulting in an improved battery capacity and battery capacity retention rate. The sulfate radical content is more preferably from 200 to 5000 wtppm, and even more preferably from 300 to 3000 wtppm.

### (Method for Producing Precursor of Oxide-Based Positive Electrode Active Material for All-Solid-State Lithium Ion Batteries)

A precursor of the oxide-based positive electrode active material for all-solid-state lithium ion batteries according to an embodiment of the present invention has a compositional formula represented by NiₓCo_{y}Mn_{1-x-y}(OH)₂, a composite hydroxide, in which 0.8 ≤ x ≤ 1.0; and 0 ≤ y ≤ 0.20. The precursor preferably has an average particle diameter D50 of from 1.0 to 5.0 µm, and a sulfate radical content of from 100 to 6000 wtppm.

The method for producing the precursor of the oxide-based positive electrode active material for all-solid-state lithium ion batteries according to an embodiment of the present invention includes a step of performing a crystallization reaction using an aqueous solution containing basic aqueous solutions of a nickel salt, a cobalt salt, a manganese salt, an aqueous ammonia and an alkali metal as a reaction solution while controlling a pH of the reaction solution to a range of from 10.5 to 11.5, and an ammonium ion concentration to a range of from 5 to 25 g/L and a temperature of the reaction solution to a range of from 40 to 65 °C.

The method for producing the precursor of the oxide-based positive electrode active material for all-solid-state lithium ion batteries according to an embodiment of the present invention is characterized by performing the crystallization reaction while thus controlling the pH, the ammonium ion concentration, and the temperature of the reaction solution to the fixed ranges. According to this method, it is possible to produce the precursor having a lower alkali content, a reduced sulfate radical content, and an average particle diameter D50 of from 1.0 to 5.0 µm. Therefore, the precursor having higher crystallinity can be obtained, and the use of the precursor can lead to a decreased residual alkali content and improved chemical properties of the battery even if the fired positive electrode active material is not washed.

In the method for producing the precursor of the oxide-based positive electrode active material for all-solid lithium ion batteries according to an embodiment of the present invention, the crystallization reaction is performed while controlling the pH, the ammonium ion concentration and the temperature of the reaction solution to the fixed ranges as described above. For this purpose, for example, three raw materials of (1) a mixed aqueous solution of a nickel salt, a cobalt salt and a manganese salt, (2) an aqueous ammonia solution and (3) a basic aqueous solution of an alkali metal are continuously fed in small amounts to a reaction vessel to react with one another. As a specific example, the crystallization reaction may be performed by continuously feeding (1) the mixed aqueous solution of the nickel salt, the cobalt salt, and the manganese salt at 0.60 L/h, (2) the aqueous ammonia at 0.40 L/h, and (3) the aqueous solution of sodium hydroxide at 0.35 L/h to a 10 L reaction vessel. By thus continuously feeding the three raw materials to the reaction vessel in small amounts to react with them, variations in the pH and the ammonia concentration of the reaction solution in the reaction vessel are satisfactorily suppressed, resulting in easy controls of the pH of the reaction solution to the range of from 10.5 to 11.5 and the ammonium ion concentration to the range of from 5 to 25 g/L.

The basic aqueous solution of the alkali metal of the above (3) may be an aqueous solution of sodium hydroxide, potassium hydroxide, carbonate or the like. Further, examples of the aqueous solution of the carbonate include an aqueous solution of a carbonate-based salt such as an aqueous solution of sodium carbonate, an aqueous solution of potassium carbonate, an aqueous solution of sodium hydrogen carbonate, and an aqueous solution of potassium hydrogen carbonate.

The method for producing the precursor of the oxide-based positive electrode active material for all-solid-state lithium ion batteries according to an embodiment of the present invention performs the crystallization reaction while controlling the pH of the reaction solution to the range of from 10.5 to 11.5. However, if the pH is less than 10.5, the solubility of nickel in the reaction solution may be increased, and a ratio of the nickel in the produced precursor may be decreased, thereby deviating from the adjusted composition ratio of the metal salt. If the pH is more than 11.5, a particle diameter of the produced precursor is too small, so that powder density of the positive electrode active material may be decreased, and the energy density per volume may be decreased. The pH of the reaction solution may be 10.7 or more, or 10.9 or more, or 11.3 or less, or 11.1 or less.

The method for producing the precursor of the oxide-based positive electrode active material for all-solid-state lithium ion batteries according to an embodiment of the present invention performs the crystallization reaction while controlling the ammonium ion concentration in the reaction solution to the range of from 5 to 25 g/L. According to such a configuration, the residual alkali content of the oxide-based positive electrode active material for all-solid-state lithium ion batteries produced by using the produced precursor can be controlled to 0.3 to 2.0% by mass. The ammonium ion concentration in the reaction solution is preferably from 10 to 22 g/L, and even more preferably from 15 to 20 g/L.

The method for producing the precursor of the oxide-based positive electrode active material for all-solid-state lithium ion batteries according to an embodiment of the present invention performs the crystallization reaction while controlling the temperature of the reaction solution to the range of from 40 to 65 °C. If the temperature is less than 40 °C, the particle diameter of the produced precursor will be too large, so that when it is used as a positive electrode active material, the contact area with the solid electrolyte becomes insufficient, resulting in higher resistance. As a result, any movement of lithium during charging/discharging may be hindered and rate characteristics may be deteriorated. The temperature of more than 65 °C may cause a risk of a defective device or a disadvantage in terms of energy cost. The temperature of the reaction solution may be 45 °C or more, or 50 °C or more. Further, the temperature of the reaction solution may be 55 °C or less.

### (Method for Producing Oxide-Based Positive Electrode Active Material for All-Solid-State Lithium Ion Batteries)

The method for producing the oxide-based positive electrode active material for all-solid-state lithium ion batteries according to an embodiment of the present invention includes steps of: mixing the precursor produced by the above method with a lithium compound such that a ratio of an atomic number of lithium to a sum (Me) of atomic numbers of Ni, Co and Mn (Li / Me) is from 0.98 to 1.05, to form a lithium mixture; and firing the lithium mixture in an oxygen atmosphere at a temperature of 450 to 520 °C for 2 to 15 hours, and then further firing it at a temperature of 680 to 850 °C for 2 to 15 hours. The firing of the lithium mixture at a temperature of less than 680 °C may cause a problem that the precursor does not sufficiently react with the lithium compound. Also, the firing of the lithium mixture at a temperature of more than 850 °C may cause a problem that oxygen is released from the crystal structure.

According to the method for producing the oxide-based positive electrode active material for all-solid lithium ion batteries according to an embodiment of the present invention, the precursor is produced by performing the crystallization reaction using the aqueous solution containing the basic aqueous solutions of the nickel salt, the cobalt salt, the manganese salt, the aqueous ammonia and the alkali metal as a reaction solution while controlling the pH of the reaction solution to the range of from 10.5 to 11.5, the ammonium ion concentration to the range of from 5 to 25 g/L, and the temperature of the reaction solution to the range of from 40 to 65 °C. Therefore, it is possible to produce the transition metal precursor which has higher crystallinity and reacts well during the firing. The precursor is then mixed with the lithium source at a molar ratio of Li / (Ni + Co + Mn) = 0.98 to 1.05 and fired at 450 to 520 °C for 2 to 15 hours, and then further fired at 680 to 850 °C for 2 to 15 hours, whereby the oxide-based positive electrode active material for all-solid-state lithium ion batteries having a decreased residual alkali content and a decreased sulfate radical content can be produced.

### (All-Solid-State Lithium Ion Battery Including Oxide-Based Positive Electrode Active Material for All-Solid-State Lithium Ion Batteries)

By forming a positive electrode layer using the oxide-based positive electrode active material for all-solid-state lithium ion batteries according to the embodiment of the present invention, an all-solid-state lithium ion battery including a solid electrolyte layer, the positive electrode layer, and a negative electrode layer can be produced.

### EXAMPLES

Hereinafter, Examples are provided for better understanding of the present invention and its advantages, but the present invention is not limited to these Examples.

As shown below, a precursor of an oxide-based positive electrode active material and an oxide-based positive electrode active material were prepared in each of Test Examples A1 to A11 and Test Examples B1 to B6, and an average particle diameter D50, a residual alkali content and a sulfate radical content were measured for each of the precursors and the oxide-based positive electrode active materials. Further, battery characteristics of an all-solid-state lithium ion battery with each positive electrode active material were measured. Furthermore, contents of Li, Ni, Mn, and Co in each positive electrode active material were measured by an inductively coupled plasma emission spectrophotometer (ICP-OES) and an ion chromatography. From the analysis results, a, x, and y of the compositional formula: LiₐNiₓCo_{y}Mn_{1-x-y} representing the positive electrode active material were determined. As a result, it was confirmed that the composition was the same as that shown in the positive electrode active material preparation conditions in Table 1 as described later. It should be noted that the ratio Li/Me in Table 1 corresponds to the "a" in the above formula.

### -Average Particle Diameter D50-

The average particle diameter D50 of the oxide-based positive electrode active material was measured by MT 3300 EXII from Microtrac.

### -Residual Alkali Content-

The residual alkali content was determined by dispersing 1 g of each produced positive electrode active material powder in 50 mL of pure water, stirring it for 10 minutes and filtering it, and then measuring a potential difference of a mixed solution of 10 mL of filtrate and 15 mL of pure water using 0.1 N HCI.

### -Sulfate Radical Content-

The sulfate radical content in the positive electrode active material was measured by an inductively coupled plasma optical emission spectrometer (ICP-OES).

### - Battery Characteristics -

Hereinafter, each all-solid-state battery cell was produced in a glove box in an argon atmosphere. Each of the oxide-based positive electrode active materials obtained in Test Examples A1 to A11 and Test Examples B1 to B6 was coated with LiOC₂H₅ and Nb(OC₂H₅)₅, and then fired in an oxygen atmosphere at 400 °C for 1 hour to prepare a positive electrode active material having a surface coated with an amorphous layer of lithium niobate.

Subsequently, 75 mg of the positive electrode active material having the coated surface was mixed with 25 mg of a sulfide solid electrolyte material Li₃PS₄ to obtain a positive electrode mixture.

Further, 80 mg of the sulfide solid electrolyte material Li₃PS₄ was pressed at a pressure of 5 MPa using a pellet molding machine to form a solid electrolyte layer. Onto the solid electrolyte layer, 10 mg of the positive electrode mixture was put and pressed at a pressure of 30 MPa to prepare a mixture layer.

The resulting mixture layer of the solid electrolyte layer and the positive electrode active material layer was turned upside down, and the side of the solid electrolyte layer was provided with a Li foil (a diameter of 5 mm x a thickness of 0.1 mm) attached to a SUS sheet, and pressed at a pressure of 20 MPa to form a Li negative electrode layer, thereby producing a laminate in which the positive electrode active material layer, the solid electrolyte layer, and the Li negative electrode layer were laminated in this order.

The laminate was then placed in a battery test cell made of SUS 304 and a restraining pressure was applied to obtain an all-solid-state secondary battery, and 25 °C battery initial characteristics (a charge capacity, a discharge capacity, charge/discharge characteristics) were measured. The charging/discharging was carried out under charging conditions: CC/CV 4.2 V, 0.1 C, and discharging conditions: CC 0.05 C, up to 3.0V.

### (Test Example A1)

Each of 1.5 mol/L aqueous solutions of nickel sulfate, cobalt sulfate and manganese sulfate was prepared, and a predetermined amount of each aqueous solution was weighed, and a mixed solution was prepared such that a ratio of Ni:Co:Mn was 80:10:10. The solution was fed to a reaction vessel equipped with a stirring blade inside the vessel.

Subsequently, while operating the stirring blade, an aqueous ammonia and 20% by mass of an aqueous solution of sodium hydroxide were added into the mixed solution in the reaction vessel such that the pH and the ammonium ion concentration of the mixed solution in the reaction vessel were 11.3 and 15 g/L, respectively, and a composite hydroxide Ni-Co-Mn was co-precipitated by the crystallization method. The temperature of the mixed solution in the reaction vessel at this time was maintained at 60 °C with a water jacket.

Further, a nitrogen gas was introduced into the reaction vessel to prevent oxidation of the coprecipitate produced by the reaction. The gas introduced into the reaction vessel is not limited to the above nitrogen gas, and any gas can be used as long as it is a gas that does not promote the oxidation, such as helium, neon, argon, and carbon dioxide.

The coprecipitate was suctioned and filtered, and then washed with pure water, and dried at 120 °C for 12 hours. The composition: Ni_{0.80}Co_{0.10}Mn_{0.10}(OH)₂, the average particle diameter D50, and the sulfate radical content of the Ni-Co-Mn composite hydroxide particles thus produced were measured.

The composite hydroxide particles were then combined with lithium hydroxide such that the ratio (Li / Me) of the atomic number of lithium (Li) to Me, in which Me represents the sum of the atomic numbers of the metals consisting of Ni, Co, and Mn of the composite hydroxide particles, was 1.01, and mixed together in an automatic mortar for 30 minutes. The mixed powder was filled in an alumina saggar, and fired in a muffle furnace at 500 °C for 4 hours, and then further fired at 800 °C for 8 hours, in an oxygen atmosphere, to prepare an oxide-based positive electrode active material.

### (Test Example A2)

In Test Example A2, an oxide-based positive electrode active material for lithium ion batteries was prepared under the same conditions as those of Test Example A1, with the exception that the ratio (Li / Me) of the atomic number of lithium (Li) to Me, in which Me represents the sum of the atomic numbers of the metals consisting of Ni, Co, and Mn of the Ni-Co-Mn composite hydroxide particles (composition: Ni_{0.80}Co_{0.10}Mn_{0.10}(OH)₂), was 0.98.

### (Test Example A3)

In Test Example A3, aqueous ammonia and a 20% by mass aqueous sodium hydroxide solution were added to the mixed solution in the reaction vessel such that the pH of the mixed solution in the reaction vessel in Test Example A1 was 11.5 and the ammonium ion concentration was 22 g/L, and the composite hydroxide of Ni-Co-Mn was co-precipitated by the crystallization method. At this time, the temperature of the mixed solution in the reaction vessel was maintained at 50 °C with a water jacket.

The Ni-Co-Mn composite hydroxide particles (composition: Ni_{0.80}Co_{0.10}Mn_{0.10}(OH)₂) thus prepared were combined with lithium hydroxide such that the ratio (Li / Me) of the atomic number of lithium (Li) to Me, in which Me represents the sum of the atomic numbers of the metals consisting of Ni, Co, and Mn of the composite hydroxide particles, was 1.01, and mixed together in an automatic mortar for 30 minutes. The mixed powder was filled in an alumina saggar, and fired in a muffle furnace at 500 °C for 4 hours, and then further fired at 800 °C for 8 hours, in an oxygen atmosphere, to prepare an oxide-based positive electrode active material.

### (Test Example A4)

In Test Example A4, aqueous ammonia and a 20% by mass aqueous sodium hydroxide solution were added to the mixed solution in the reaction vessel such that the pH of the mixed solution in the reaction vessel in Test Example A1 was 10.8 and the ammonium ion concentration was 9 g/L, and the composite hydroxide of Ni-Co-Mn was co-precipitated by the crystallization method. At this time, the temperature of the mixed solution in the reaction vessel was maintained at 50 °C with a water jacket.

The Ni-Co-Mn composite hydroxide particles (composition: Ni_{0.80}Co_{0.10}Mn_{0.10}(OH)₂) thus prepared were combined with lithium hydroxide such that the ratio (Li / Me) of the atomic number of lithium (Li) to Me, in which Me represents the sum of the atomic numbers of the metals consisting of Ni, Co, and Mn of the composite hydroxide particles, was 1.03, and mixed together in an automatic mortar for 30 minutes. The mixed powder was filled in an alumina saggar, and fired in a muffle furnace at 500 °C for 4 hours, and then further fired at 760 °C for 8 hours, in an oxygen atmosphere, to prepare an oxide-based positive electrode active material.

### (Test Example A5)

In Test Example A5, the mixing ratio of the respective aqueous solutions in the coprecipitation reaction in Test Example A1 was adjusted to be Ni: Co: Mn = 0.80:0:0.20, and aqueous ammonia and a 20% by mass aqueous sodium hydroxide solution were added to the mixed solution in the reaction vessel such that the pH of the mixed solution in the reaction vessel was 11.5 and the ammonium ion concentration was 25 g/L, and the composite hydroxide of Ni-Co-Mn was co-precipitated by the crystallization method. At this time, the temperature of the mixed solution in the reaction vessel was maintained at 60 °C with a water jacket.

The Ni-Co-Mn composite hydroxide particles (composition: Ni_{0..80}Co₀. ₀Mn_{0.20}(OH)₂) thus prepared were combined with lithium hydroxide such that the ratio (Li / Me) of the atomic number of lithium (Li) to Me, in which Me represents the sum of the atomic numbers of the metals consisting of Ni, Co, and Mn of the composite hydroxide particles, was 1.02, and mixed together in an automatic mortar for 30 minutes. The mixed powder was filled in an alumina saggar, and fired in a muffle furnace at 520 °C for 4 hours, and then further fired at 850 °C for 8 hours, in an oxygen atmosphere, to prepare an oxide-based positive electrode active material.

### (Test Example A6)

In Test Example A6, the Ni-Co-Mn composite hydroxide particles (composition: Ni_{0.80}Co_{0.0}Mn_{0.20}(OH)₂) in Test Example A5 were combined with lithium hydroxide such that the ratio (Li / Me) of the atomic number of lithium (Li) to Me, in which Me represents the sum of the atomic numbers of the metals consisting of Ni, Co, and Mn of the composite hydroxide particles, was 1.05, and mixed together in an automatic mortar for 30 minutes. The mixed powder was filled in an alumina saggar, and fired in a muffle furnace at 450 °C for 4 hours, and then further fired at 850 °C for 8 hours, in an oxygen atmosphere, to prepare an oxide-based positive electrode active material.

### (Test Example A7)

In Test Example A7, Ni-Co-Mn composite hydroxide particles were prepared under the same conditions as those of Test Example A5, with the exception that the temperature of the mixed solution in the reaction vessel in Test Example A5 was maintained at 65 °C with a water jacket.

The Ni-Co-Mn composite hydroxide particles (composition: Ni_{0.80}Co_{0.0}Mn_{0.20}(OH)₂) thus prepared were combined with lithium hydroxide such that the ratio (Li / Me) of the atomic number of lithium (Li) to Me, in which Me represents the sum of the atomic numbers of the metals consisting of Ni, Co, and Mn of the composite hydroxide particles, was 1.01, and mixed together in an automatic mortar for 30 minutes. The mixed powder was filled in an alumina saggar, and fired in a muffle furnace at 450 °C for 4 hours, and then further fired at 820 °C for 8 hours, in an oxygen atmosphere, to prepare an oxide-based positive electrode active material.

### (Test Example A8)

In Test Example A8, the mixing ratio of the respective aqueous solutions of the coprecipitation reaction in Test Example A1 was adjusted to be Ni: Co: Mn = 0.90:0.07:0.03, and aqueous ammonia and a 20% by mass aqueous sodium hydroxide solution were added to the mixed solution in the reaction vessel such that the pH of the mixed solution in the reaction vessel was 10.5 and the ammonium ion concentration was 14 g/L, and the composite hydroxide of Ni-Co-Mn was co-precipitated by the crystallization method. At this time, the temperature of the mixed solution in the reaction vessel was maintained at 65 °C with a water jacket.

The Ni-Co-Mn composite hydroxide particles (composition: Ni_{0.90}Co_{0.07}Mn_{0.03}(OH)₂) thus prepared were combined with lithium hydroxide such that the ratio (Li / Me) of the atomic number of lithium (Li) to Me, in which Me represents the sum of the atomic numbers of the metals consisting of Ni, Co, and Mn of the composite hydroxide particles, was 0.98, and mixed together in an automatic mortar for 30 minutes. The mixed powder was filled in an alumina saggar, and fired in a muffle furnace at 500 °C for 4 hours, and then further fired at 740 °C for 8 hours, in an oxygen atmosphere, to prepare an oxide-based positive electrode active material.

### (Test Example A9)

In Test Example A9, an oxide-based positive electrode active material was prepared under the same conditions as those of Test Example A8, with the exception that the ratio (Li / Me) of the atomic number of lithium (Li) to Me, in which Me represents the sum of the atomic numbers of the metals consisting of Ni, Co, and Mn of the Ni-Co-Mn composite hydroxide particles (composition: Ni_{0.90}Co_{0.07}Mn_{0.03}(OH)₂), was 1.00.

### (Test Example A10)

In Test Example A10, aqueous ammonia and a 20% by mass aqueous sodium hydroxide solution were added to the mixed solution in the reaction vessel such that the pH of the mixed solution in the reaction vessel in Test Example A8 was 11.0 and the ammonium ion concentration was 5 g/L, and the composite hydroxide of Ni-Co-Mn was co-precipitated by the crystallization method. At this time, the temperature of the mixed solution in the reaction vessel was maintained at 65 °C with a water jacket.

The Ni-Co-Mn composite hydroxide particles (composition: Ni_{0.90}Co_{0.07}Mn_{0.03}(OH)₂) thus prepared were combined with lithium hydroxide such that the ratio (Li / Me) of the atomic number of lithium (Li) to Me, in which Me represents the sum of the atomic numbers of the metals consisting of Ni, Co, and Mn of the composite hydroxide particles, was 1.00, and mixed together in an automatic mortar for 30 minutes. The mixed powder was filled in an alumina saggar, and fired in a muffle furnace at 500 °C for 4 hours, and then further fired at 740 °C for 8 hours, in an oxygen atmosphere, to prepare an oxide-based positive electrode active material.

### (Test Example A11)

In Test Example A11, the mixing ratio of the respective aqueous solutions of the coprecipitation reaction in Test Example A1 was adjusted to be Ni: Co: Mn = 1.00:0:0, and aqueous ammonia and a 20% by mass aqueous sodium hydroxide solution were added to the mixed solution in the reaction vessel such that the pH of the mixed solution in the reaction vessel was 11.3 and the ammonium ion concentration was 5 g/L, and the composite hydroxide of Ni-Co-Mn was co-precipitated by the crystallization method. At this time, the temperature of the mixed solution in the reaction vessel was maintained at 40 °C with a water jacket.

The Ni-Co-Mn composite hydroxide particles (composition: Ni_{1.0}Co_{0.0}Mn₀. ₀(OH)₂) thus prepared were combined with lithium hydroxide such that the ratio (Li / Me) of the atomic number of lithium (Li) to Me, in which Me represents the sum of the atomic numbers of the metals consisting of Ni, Co, and Mn of the composite hydroxide particles, was 1.00, and mixed together in an automatic mortar for 30 minutes. The mixed powder was filled in an alumina saggar, and fired in a muffle furnace at 520 °C for 4 hours, and then further fired at 680 °C for 8 hours, in an oxygen atmosphere, to prepare an oxide-based positive electrode active material.

### (Test Example B1)

In Test Example B1, the Ni-Co-Mn composite hydroxide particles (composition: Ni_{0.80}Co_{0.10}Mn_{0.10}(OH)₂) in Test Example A1 were combined with lithium hydroxide such that the ratio (Li / Me) of the atomic number of lithium (Li) to Me, in which Me represents the sum of the atomic numbers of the metals consisting of Ni, Co, and Mn of the composite hydroxide particles, was 1.00, and mixed together in an automatic mortar for 30 minutes. The mixed powder was filled in an alumina saggar, and fired in a muffle furnace at 520 °C for 4 hours, and then further fired at 650 °C for 8 hours, in an oxygen atmosphere, to prepare an oxide-based positive electrode active material.

### (Test Example B2)

In Test Example B2, an oxide-based positive electrode active material for lithium ion batteries was prepared under the same conditions as those of Test Example A1, with the exception that the ratio (Li / Me) of the atomic number of lithium (Li) to Me, in which Me represents the sum of the atomic numbers of the metals consisting of Ni, Co, and Mn of the Ni-Co-Mn composite hydroxide particles (composition: Ni_{0.80}Co_{0.10}Mn_{0.10}(OH)₂), was 0.96.

### (Test Example B3)

In Test Example B3, aqueous ammonia and a 20% by mass aqueous sodium hydroxide solution were added to the mixed solution in the reaction vessel such that the pH of the mixed solution in the reaction vessel in Test Example A5 was 11.7 and the ammonium ion concentration was 27 g/L, and the composite hydroxide of Ni-Co-Mn was co-precipitated by the crystallization method. At this time, the temperature of the mixed solution in the reaction vessel was maintained at 60 °C with a water jacket.

The Ni-Co-Mn composite hydroxide particles (composition: Ni_{0.80}Co_{0. 0}Mn_{0.20}(OH)₂) thus prepared were combined with lithium hydroxide such that the ratio (Li / Me) of the atomic number of lithium (Li) to Me, in which Me represents the sum of the atomic numbers of the metals consisting of Ni, Co, and Mn of the composite hydroxide particles, was 1.01, and mixed together in an automatic mortar for 30 minutes. The mixed powder was filled in an alumina saggar, and fired in a muffle furnace at 520 °C for 4 hours, and then further fired at 850 °C for 8 hours, in an oxygen atmosphere, to prepare an oxide-based positive electrode active material.

### (Test Example B4)

In Test Example B4, an oxide-based positive electrode active material for lithium ion batteries was prepared under the same conditions as those of Test Example A6, with the exception that the ratio (Li / Me) of the atomic number of lithium (Li) to Me, in which Me represents the sum of the atomic numbers of the metals consisting of Ni, Co, and Mn of the Ni-Co-Mn composite hydroxide particles (composition: Ni_{0.80}Co_{0.0}Mn_{0.20}(OH)₂), was 1.07.

### (Test Example B5)

In Test Example B5, aqueous ammonia and a 20% by mass aqueous sodium hydroxide solution were added to the mixed solution in the reaction vessel such that the pH of the mixed solution in the reaction vessel in Test Example A8 was 10.3 and the ammonium ion concentration was 20 g/L, and the composite hydroxide of Ni-Co-Mn was co-precipitated by the crystallization method. At this time, the temperature of the mixed solution in the reaction vessel was maintained at 65 °C with a water jacket.

The Ni-Co-Mn composite hydroxide particles (composition: Ni_{0.90}Co_{0. 07}Mn_{0.03}(OH)₂) thus prepared were combined with lithium hydroxide such that the ratio (Li / Me) of the atomic number of lithium (Li) to Me, in which Me represents the sum of the atomic numbers of the metals consisting of Ni, Co, and Mn of the composite hydroxide particles, was 1.01, and mixed together in an automatic mortar for 30 minutes. The mixed powder was filled in an alumina saggar, and fired in a muffle furnace at 500 °C for 4 hours, and then further fired at 740 °C for 8 hours, in an oxygen atmosphere, to prepare an oxide-based positive electrode active material.

### (Test Example B6)

In Test Example B6, aqueous ammonia and a 20% by mass aqueous sodium hydroxide solution were added to the mixed solution in the reaction vessel such that the pH of the mixed solution in the reaction vessel in Test Example A11 was 11.3 and the ammonium ion concentration was 3 g/L, and the composite hydroxide of Ni-Co-Mn was co-precipitated by the crystallization method. At this time, the temperature of the mixed solution in the reaction vessel was maintained at 35 °C with a water jacket.

The Ni-Co-Mn composite hydroxide particles (composition: Ni_{1.0}Co_{0. 0}Mn_{0.0}(OH)₂) thus prepared were combined with lithium hydroxide such that the ratio (Li / Me) of the atomic number of lithium (Li) to Me, in which Me represents the sum of the atomic numbers of the metals consisting of Ni, Co, and Mn of the composite hydroxide particles, was 1.00, and mixed together in an automatic mortar for 30 minutes. The mixed powder was filled in an alumina saggar, and fired in a muffle furnace at 520 °C for 4 hours, and then further fired at 680 °C for 8 hours, in an oxygen atmosphere, to prepare an oxide-based positive electrode active material.

Table 1 shows the test conditions and evaluation results according to Test Examples A1 to A11 and Test Examples B1 to B6.

**Table 1**

| | Coprecipitation Reaction Conditions | | | Precursor Powder Properties | | Positive Electrode Active Material Production Conditions | | | | | | Positive Electrode Active Material Powder Properties Electrochemical Properties | | | |
|---|---|---|---|---|---|---|---|---|---|---|---|---|---|---|---|
| | Reaction Temperature | NH₃ Concentration | pH | Average Particle Diameter D50 | Sulfate Radical Content | Ni | Co | Mn | Ratio Li/Me | Firing Temperature 1 | Firing Temperatur e2 | Average Particle Diameter D50 | Residual Alkali Content | Discharge Capacity | Sulfate Radical Content |
| | °C | g/L | | µm | Wtppm | mol% | mol% | mol% | | °C | °C | µm | % by mass | mAh/g | Wtppm |
| Test Example A1 | 60 | 15 | 11.3 | 4.8 | 2900 | 80.0 | 10.0 | 10.0 | 1.01 | 500 | 800 | 4.6 | 0.67 | 183 | 2700 |
| Test Example A2 | 60 | 15 | 11.3 | 4.8 | 2900 | 80.0 | 10.0 | 10.0 | 0.98 | 500 | 800 | 4.9 | 0.34 | 181 | 2700 |
| Test Example A3 | 50 | 22 | 11.5 | 3.7 | 4500 | 80.0 | 10.0 | 10.0 | 1.01 | 500 | 800 | 3.8 | 0.71 | 184 | 4200 |
| Test Example A4 | 50 | 9 | 10.8 | 3.6 | 5000 | 80.0 | 10.0 | 10.0 | 1.03 | 500 | 760 | 3.6 | 1.48 | 183 | 4800 |
| Test Example A5 | 60 | 25 | 11.5 | 2.3 | 700 | 80.0 | 0.0 | 20.0 | 1.02 | 520 | 850 | 2.7 | 1.16 | 174 | 600 |
| Test Example A6 | 60 | 25 | 11.5 | 2.3 | 700 | 80.0 | 0.0 | 20.0 | 1.05 | 450 | 850 | 2.8 | 1.94 | 171 | 600 |
| Test Example A7 | 65 | 25 | 11.5 | 1.8 | 100 | 80.0 | 0.0 | 20.0 | 1.01 | 450 | 820 | 2.2 | 0.85 | 175 | 100 |
| Test Example A8 | 65 | 14 | 10.5 | 3.5 | 2300 | 90.0 | 7.0 | 3.0 | 0.98 | 500 | 740 | 3.4 | 0.48 | 197 | 2100 |
| Test Example A9 | 65 | 14 | 10.5 | 3.5 | 2300 | 90.0 | 7.0 | 3.0 | 1.00 | 500 | 740 | 3.8 | 0.81 | 196 | 2100 |
| Test Example A10 | 65 | 5 | 11 | 1.1 | 3400 | 90.0 | 7.0 | 3.0 | 1.00 | 500 | 740 | 1.3 | 0.94 | 192 | 3000 |
| Test Example A11 | 40 | 5 | 11.3 | 2.4 | 6500 | 100.0 | 0.0 | 0.0 | 1.00 | 520 | 680 | 2.7 | 1.33 | 199 | 6000 |
| Test Example B1 | 60 | 15 | 11.3 | 4.8 | 2900 | 80.0 | 10.0 | 10.0 | 1.00 | 520 | 650 | 4.7 | 2.16 | 155 | 3000 |
| Test Example B2 | 60 | 15 | 11.3 | 4.8 | 2900 | 80.0 | 10.0 | 10.0 | 0.96 | 500 | 800 | 4.8 | 0.21 | 165 | 2700 |
| Test Example B3 | 60 | 27 | 11.7 | 0.6 | 600 | 80.0 | 0.0 | 20.0 | 1.01 | 520 | 850 | 0.8 | 0.98 | 158 | 600 |
| Test Example B4 | 60 | 25 | 11.5 | 2.3 | 600 | 80.0 | 0.0 | 20.0 | 1.07 | 450 | 850 | 2.7 | 2.39 | 162 | 600 |
| Test Example B5 | 65 | 20 | 10.3 | 6.2 | 2600 | 90.0 | 7.0 | 3.0 | 1.01 | 500 | 740 | 6.8 | 0.56 | 164 | 2400 |
| Test Example B6 | 35 | 3 | 11.3 | 4.6 | 8500 | 100.0 | 0.0 | 0.0 | 1.00 | 520 | 680 | 5.0 | 1.54 | 173 | 8100 |

## Claims

1. An oxide-based positive electrode active material for all-solid-state lithium ion batteries, the oxide-based positive electrode active material having a compositional formula represented by:
LiₐNiₓCo_{y}Mn_{1-x-y}O₂, with 0.98 ≤ a ≤ 1.05; 0.8 ≤ x ≤ 1.0; and 0 ≤ y ≤ 0.20,
wherein the oxide-based positive electrode active material has an average particle diameter D50 of from 1.0 to 5.0 µm, a residual alkali content of from 0.3 to 2.0% by mass, and a sulfate radical content of from 100 to 6000 wtppm.

2. A method for producing a precursor of an oxide-based positive electrode active material for all-solid-state lithium ion batteries, the precursor being represented by a compositional formula of a composite hydroxide:
NiₓCo_{y}Mn_{1-x-y}(OH)₂, with 0.8 ≤ x ≤ 1.0; and 0 ≤ y ≤ 0.20,
wherein the method comprises a step of performing a crystallization reaction using an aqueous solution containing basic aqueous solutions of a nickel salt, a cobalt salt, a manganese salt, an aqueous ammonia and an alkali metal as a reaction solution while controlling a pH of the reaction solution to a range of from 10.5 to 11.5, and an ammonium ion concentration to a range of from 5 to 25 g/L and a temperature of the reaction solution to a range of from 40 to 65 °C.

3. The method for producing the precursor of the oxide-based positive electrode active material for all-solid-state lithium ion batteries according to claim 2, wherein the precursor has an average particle diameter D50 of from 1.0 to 5.0 µm.

4. The method for producing the precursor of the oxide-based positive electrode active material for all-solid-state lithium ion batteries according to claim 2 or 3, wherein the precursor has a sulfate radical content of from 100 to 6000 wtppm.

5. A method for producing an oxide-based positive electrode active material for all-solid-state lithium ion batteries, the method comprising steps of:
mixing the precursor produced by the method for producing the precursor according to any one of claims 2 to 4 with a lithium compound such that a ratio of an atomic number of lithium to a sum (Me) of atomic numbers of Ni, Co and Mn (Li / Me) is from 0.98 to 1.05, to form a lithium mixture; and
firing the lithium mixture in an oxygen atmosphere at a temperature of 450 to 520 °C for 2 to 15 hours, and then further firing it at a temperature of 680 to 850 °C for 2 to 15 hours.

6. An all-solid-state lithium ion battery, comprising the oxide-based positive electrode active material for all-solid-state lithium ion batteries according to claim 1.
